# EUROPÄISCHE PATENTSCHRIFT

(11) **EP 0 748 676 B1**
(45) Veröffentlichungstag und Bekanntmachung des Hinweises auf die Patenterteilung: **21.07.1999**
(21) Anmeldenummer: 96106633.9
(22) Anmeldetag: 26.04.1996
(51) Int. Cl.: B29C 45/14, F24C 15/10, A47B 77/08

(54) **Glaskeramikmulde**
Vitreous ceramic hob
Table de cuisson en vitrocéramique

(30) Priorität: 14.06.1995 DE 19521690
(43) Veröffentlichungstag der Anmeldung: 18.12.1996
(73) Patentinhaber: BSH Bosch und Siemens Hausgeräte GmbH, 81669 München (DE)
(72) Erfinder: Meierhofer, Rudolf, 83352 Altenmarkt (DE); Edlmann, Manfred, 83530 Schnaitsee (DE); Steiner, Herbert, 83278 Traunstein (DE)

(56) Entgegenhaltungen:
- EP-A- 0 449 347
- EP-A- 0 641 975
- US-A- 3 944 786
- US-A- 4 492 217

## Beschreibung

Die vorliegende Erfindung betrifft eine Glaskeramikmulde mit einer Glaskeramikplatte und wenigstens einem darunter angeordneten Heizkörper, wobei die Glaskeramikplatte an deren Umfang von einem angespritzten Kunststoffrahmen umzogen ist.

Eine derartige Glaskeramikplatte ist bekannt aus der EP 0 449 347 A1, wobei der Kunststoffrahmen durch Spritztechnik mit der Glaskeramikplatte zu einer Baueinheit fest verbunden ist. Nachteilig dabei ist, daß beim Abstellen heißer Kochgeräte auf dem Kunststoffrahmen dieser beschädigt bzw. in seinem Aussehen nachteilig beeinflußt werden kann.

Aufgabe der vorliegenden Erfindung ist es deshalb, eine Glaskeramikmulde bereitzustellen, deren angespritzter Rahmen auch extremen Belastungen Stand hält.

Erfindungsgemäß ist dies dadurch gelöst, daß auf einer Oberseite des Kunststoffrahmens ein die Glaskeramikplatte umziehender Schutzbelag aus hochtemperaturbeständigem Material angeordnet ist. Dadurch ist es zum einen möglich, den Kunststoffrahmen aus kostengünstigem, im Vergleich zu dem Material des Schutzbelags weniger temperaturbeständigem Material herzustellen. Zum anderen kann die Verwendung des hochtemperaturbeständigen Materials auf eine ausreichend dicke Schicht beschränkt werden. Auch dies kann beim Einsatz kostenintensiven Materials für den Schutzbelag deutliche Einsparungen bringen. Beim Abstellen eines Kochgefäßes auf dem Schutzbelag widersteht dieser den dabei vorherrschenden hohen Temperaturen ohne Schaden und schützt den darunterliegenden Kunststoffrahnen.

Gemäß einer bevorzugten Ausführungsform überdeckt der Schutzbelag die Oberseites des Kunststoffrahmens im wesentlichen vollständig. Dies ermöglicht einen größeren Kontaktbereich des Schutzbelags mit den Kunststoffrahmen und damit eine bessere Anhaftung des Schutzbelags. Weiterhin ist durch die vollständige Überdeckung ein optimaler Schutz des Kunststoffrahmens sichergestellt, insbesondere gegen von einem auf dem Schutzbelag abgestellten Kochgefäß ausgehende Strahlungswärme. Weiterhin kann die vollständige Überdeckung fertigungstechnisch einfacher sein und stellt eine frei von Stufen gestaltete ebene Rahmenoberfläche bereit.

Alternativ dazu kann der Schutzbelag auch nur Teilbereiche der Oberseite des Kunststoffrahmens überdecken und von dieser hervorstehend Schutzabstellflächen auf dem Kunststoffrahmen bilden. Dadurch kann bei einer deutlichen Materialersparnis bezüglich des Schutzbelags gegebenenfalls ein trotzdem ausreichender Schutz für den Kunststoffrahmen gewährleistet sein. Die Geometrie der Schutzabstellflächen und deren Beabstandung voneinander ist dabei derart gestaltet, daß ein direkter Kontakt eines Kochgefäßes mit dem temperaturempfindlicheren Kunststoffrahmen ausgeschlossen ist.

Bevorzugterweise ist der Schutzbelag aus einem hochtemperaturbeständigen Kunststoff, der an die Glaskeramikplatte bzw. den Kunststoffrahmen gespritzt ist. Dadurch ist der vollständige Rahmen mit einer einzigen Fertigungstechnik herstellbar, wobei ein besonders flüssigkeitsdichter, die Glaskeramikplatte einfassender Rahmen bereitgestellt. Um ein Leiten der Wärme durch den Schutzbelag zum Kunststoffrahmen zu erschweren, ist das Material des Kunststoff-Schutzbelags schlecht wärmeleitend.

Alternativ dazu ist der Schutzbelag aus Metall. Wo die guten Wärmeleitungseigenschaften des Metall-Schutzbelags von untergeordneter Bedeutung sind, ist gemäß dieser Lösung die problematische Materialauswahl aus geeigneten Kunststoffen bezüglich zumindest der Temperatureigenschaften gegenstandslos. Ein als Schutzrahmen aus Metall ausgebildeter Schutzbelag, der auf den Kunststoffrahmen befestigt, insbesondere gesteckt ist, besitzt bezüglich der Recylebarkeit besondere Vorteile. Zudem ist der Kunststoffrahmen dadurch zusätzlich stabilisiert.

Gemäß einer bevorzugten Ausführungsform umfaßt der Kunststoffrahmen den Randbereich der Glaskeramikplatte an deren Ober- und Unterseite. Dadurch ist ein optimaler Halt und eine gute Dichtigkeit zwischen dem Kunststoffrahmen und der Glaskeramikplatte gewährleistet. Zudem kann der die Oberseite der Glaskeramikplatte umfassende Kunststoffrahmen einen Überlaufschutz für auf der Glaskeramikplatte verschüttete Flüssigkeit darstellen. Weiterhin können im Falle eines Schutzbelages aus hochtemperaturbeständigem Kunststoff durch die Ausführung des Muldenrahmens im wesentlichen aus weniger temperaturbeständigem und kostengünstigerem Material Kosten gesenkt werden.

Alternativ dazu übergreift der Schutzbelag den Randbereich der Glaskeramikplatte an deren Ober- und Unterseite. Dies kann insbesondere bei der Verwendung von hochtemperaturbeständigem Kunststoff, der üblicherweise spritztechnisch schwer handzuhaben ist, Vorteile bringen im Vergleich zum Aufspritzen einer relativ dünnen Schicht aus hochtemperaturbeständigem Kunststoff auf den eigentlichen Kunststoffrahmen.

In beiden Fällen übergreift der Schutzbelag oder der Kunststoffrahmen den Randbereich der Glaskeramikplatte um zwischen etwa 1 und 10 mm, vorzugsweise 2 bis 5 mm. So ist zum einen eine wegen der unterschiedlichen Längenausdehnungskoeffizienten des Rahmens- und des Glaskeramikplatten-Materials bei Temperaturbelastung für eine sichere Einfassung der Glaskeramikplatte erforderliche Einfaßtiefe gegeben. Zum anderen ist nicht zu viel an ebener Abstellfläche auf der Glaskeramikplatte verloren.

Bevorzugterweise weist der Kunststoffrahmen einstückig angeformte Elemente zur Positionierung der Heizkörper unter der Glaskeramikplatte und/oder zur Aufnahme von elektrischen Leitungen oder dergleichen auf. Dadurch sind auf fertigungstechnisch einfache Art zusätzliche Funktionselemente in den Kunststoffrahmen integriert.

Wenn die Heizkörper direkt an der Glasplatte befestigt sind, können bezüglich der mechanischen Belastbarkeit geringere Anforderungen an den Kunststoff gestellt werden. Zudem kann eine direkte Wärmeleitung von den Heizelementen zum Kunststoffrahmen durch die Befestigungselemente unterbunden werden.

Gemäß einer bevorzugten Ausführungsform ist zwischen dem Kunststoffrahmen oder dem Schutzbelag und der Glaskeramikplatte ein die Glaskeramikplatte umziehendes Dämpfungselement angeordnet. Bei mechanischen Belastungen, insbesondere bei einer Stoßbelastung auf die Glaskeramikplatte ist diese federnd im Rahmen gelagert und somit vor einem Ausbrechen geschützt. Je nach Anforderungen an die Dämpfung kann das Dämpfungselement lediglich unter die Glasplatte gelegt sein, oder auch ein die Glaskeramik umfassendes U-förmiges Profil aufweisen und auf diese gesteckt sein.

Gemäß einer bevorzugten Ausführungsform erstreckt sich der Schutzbelag von der Oberseite des Kunststoffrahmens aus in dessen Inneres nach unten. Dadurch ist der Kunststoffrahmen zusätzlich stabilisiert, um die insbesondere beim Transport der Glaskeramikmulde auftretenden Belastungen, insbesondere bei Standherden, überstehen zu können. Besonders gut gelingt dies, wenn der Schutzrahmen aus Metall ist. Die Versteifung des Kunststoffrahmens ist jedoch auch mit speziellen Kunststoffeinlagen möglich.

Nachfolgend sind anhand schematischer Darstellungen sechs Ausführungsbeispiele der erfindungsgemäßen Glaskeramikmulde beschrieben. Es zeigen:
- Fig. 1: in einer Querschnittdarstellung eine auf einer Arbeitsplatte montierte Glaskeramikmulde gemäß dem ersten Ausführungsbeispiel;
- Fig. 2: in einer Querschnittdarstellung eine auf einer Arbeitsplatte montierte Glaskeramikmulde gemäß dem zweiten Ausführungsbeispiel;
- Fig. 3: in einer Querschnittdarstellung eine auf einer Arbeitsplatte montierte Glaskeramikmulde gemäß dem dritten Ausführungsbeispiel;
- Fig. 4: in einer Querschnittdarstellung eine für einen Standherd geeignete Glaskeramikmulde gemäß dem vierten Ausführungsbeispiel;
- Fig. 5: in einer Querschnittdarstellung eine in einem Standherd montierte Glaskeramikmulde gemäß dem fünften Ausführungsbeispiel und
- Fig. 6: in einer Draufsicht eine Glaskeramikmulde gemäß dem sechsten Ausführungsbeispiel.

Im folgenden sind die Bezugszeichen in den sechs Ausführungsbeispielen gleich gelassen, wenn dies zweckmäßig erscheint. Ansonsten sind die Merkmale der sechs Ausführungsbeispiele mit einem für das Ausführungsbeispiel typischen Buchstaben gekennzeichnet. Für das erste Ausführungsbeispiel ist dieser Buchstabe "a", für das sechste Ausführungsbeispiel "f".

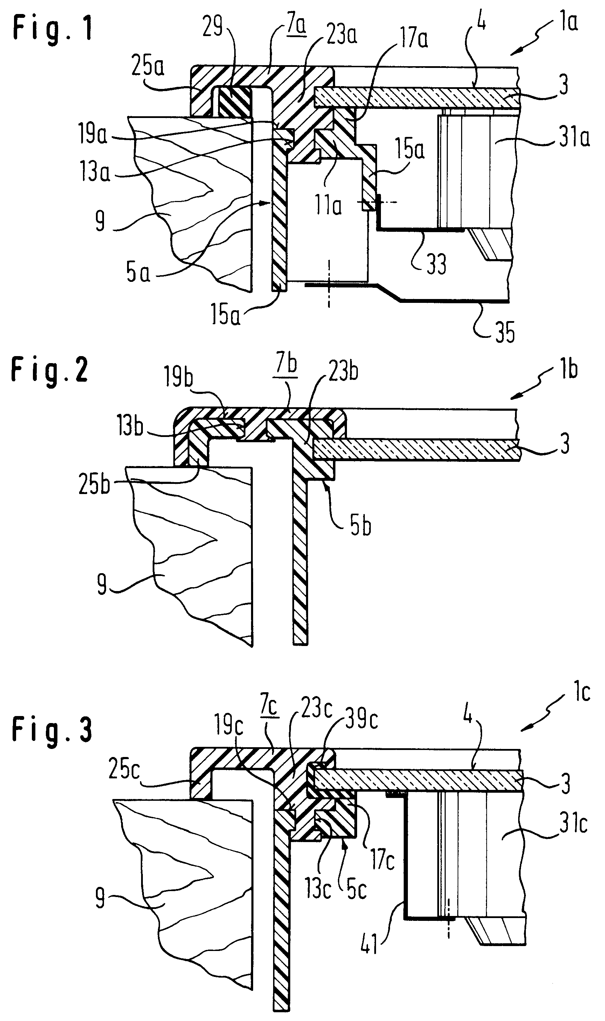

Gemäß dem ersten Auführungsbeispiel (Fig.1) weist eine Glaskeramikmulde 1a eine an sich bekannte Glaskeramikplatte 3 auf, auf deren Oberfläche 4 Kochgefäße (nicht gezeigt) zu Kochzwecken abstellbar sind. An die Glaskeramikplatte 3 ist ein Kunststoffrahmen 5a aus PA 66-Material angespritzt und an diesen bzw. an die Glaskeramikplatte 3 ein Schutzbelag 7a aus PPS-Material. Während PA66 nur für Temperaturen bis etwa 120° C geeignet ist, übersteht PPS auch Temperaturen bis zu 300° ohne Probleme. Die Glaskeramikmulde 1a ist mit Hilfe des Schutzbelages 7a auf einer Arbeitsplatte 9 bzw. in einer Aussparung dieser montiert. Der Kunststoffrahmen 5a weist einen Rahmenkorper 11a auf, in dem diesen durchdringende Spritzöffnungen 13a vorgesehen sind. Diese gewährleisten eine enge Verbindung zwischen dem Kunststoffrahmen 5a und dem Schutzbelag 7a, wenn sie beim Spritzvorgang vom dann flüssigen Schutzbelagmaterial durchflossen werden. Vom Rahmenkörper 11a aus erstrecken sich Trägerarme 15a im wesentlichen nach unten, die Elemente zur Positionierung diverser Komponenten der Glaskeramikmulde 1a bilden. Zudem erstreckt sich vom Rahmenkörper 11a auch ein die gesamte Glaskeramikplatte 3 umziehender Formarm 17a. Nach der spritztechnischen Fertigung des Kunststoffrahmens 5a wird dieser zusammen mit der Glaskeramikplatte 3 in die Spritzform eingelegt und dann der Schutzbelag 7a gespritzt. Der Formarm 17a bildet dabei während des Spritzvorgangs des Schutzbelages 7a eine formgebende Begrenzungswand für den Schutzbelag. Auf einer Oberseite 19a des Kunststoffrahmens 5a ist der zum Rahmen weitergebildete Schutzbelag 7a angeordnet. Dieser weist einen Einfassungskörper 23a und einen sich auf die Arbeitsplatte 9 zu erstreckenden, die gesamte Glaskeramikplatte 3 umziehenden Auflagerarm 25a auf. Durch das Anspritzen des Schutzbelags 7a an die Glaskeramikplatte 3 bzw. den Kunststoffrahmen 5a ist die Glaskeramikmulde 1a als kompakte Einheit ausgeformt, wobei die Glaskeramikplatte 3 flüssigkeitsdicht eingefaßt ist. In einem zwischen der Arbeitsplatte 9 und dem Auflagerarm 25a gebildeten Aufnahmeraum ist zusätzlich eine elastische Dichtung 29 angeordnet, um ein Eindringen von Flüssigkeit zwischen der Glaskeramikmulde 1a und der Arbeitsplatte 9 zu verhindern. An den Trägerarmen 25a sind die Strahlungsheizkörper 31a über Befestigungswinkel 33 bzw. die Heizungswanne 35 befestigt.

Im zweiten Ausführungsbeispiel gemäß Fig. 2 sind nur noch die wesentlichen, von dem ersten Ausführungsbeispiel abgewandelten Merkmale einer zweiten Glaskeramikmulde 1b dargestellt. Gemäß dem zweiten Ausführungsbeispiel ist an die Glaskeramikplatte 3 ein Kunststoffrahmen 5b angespritzt, der an seiner Oberseite 19b von einem Schutzbelag 7b aus PPS überzogen ist. Der angespritzte Kunststoffrahmen 5b umfaßt mit seinem Einfassungskörper 23b entsprechend dem ersten Ausführungsbeispiel die Glaskeramikplatte 3. Über Spritzöffnungen 13b ist der Schutzbelag 7b an dem Kunststoffrahmen 5b befestigt, und mittels eines Auflagerarms 25b ist die Glaskeramikmulde 1b auf der Arbeitsplatte 9 bzw. in ihr montiert. Der Schutzbelag 7b bedeckt die Oberseite 19b des Kunsttoffrahmens 7b vollständig und verbessert die Dichtigkeit zwischen der Glaskeramikplatte 3 und dem Kunststoffrahmen 5b. Dieser umfaßt den Randbereich der Glaskeramikplatte an deren Ober- und Unterseite und übergreift dabei den Rand der Glaskeramikplatte 3 um etwa 3 mm.

Gemäß dem dritten Ausführungsbeispiel (Fig.3) ist zwischen der Glaskeramikplatte 3 und einem diese umziehenden Kunststoff-Schutzbelag 7c ein Dämpfungselement 39c aus Elastomer angeordnet. Das U-profilförmige Dämpfungselement 39 wird dabei zunächst umfangsseitig auf die Glaskeramikplatte 3 aufgesteckt und dann mit Kunststoff umspritzt. Weiterhin abgewandelt ist gemäß dem dritten Ausführungsbeispiel die Befestigung eines Strahlungsheizkörpers 31c über einen an der Unterseite der Glaskeramikplatte 3 angeklebten Heizkörperträger 41.

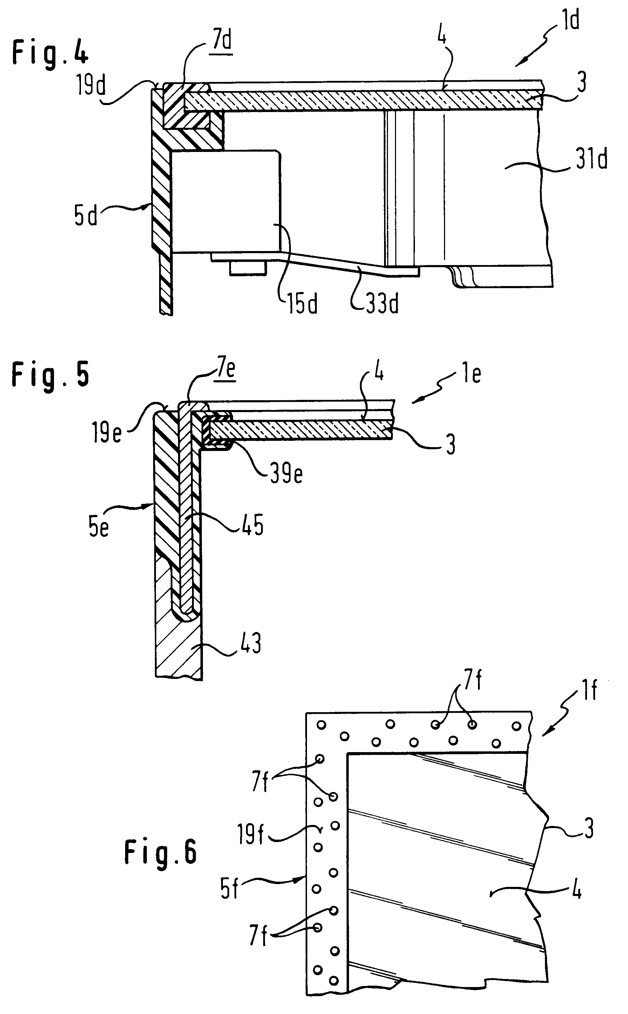

Gemäß dem vierten Ausführungsbeispiel (Fig. 4) ist eine Aufsatz-Glaskeramikmulde 1d für einen Standherd vorgesehen. Ein Kunststoffrahmen 5d ist dabei durch einen an die Glaskeramikplatte 3 angespritzten U-profilförmigen Schutzbelag 7d aus PPS geschützt. Eine Oberseite 19d des Kunststoffrahmens 5d ist zwar in einem kleinen Bereich umfangsseitig nicht von dem Schutzbelag 7d bedeckt, aufgrund der vorhandenen Geometrien ist jedoch dieser nicht bedeckte Bereich vor unmittelbarer Berührung durch ein Kochgefäß geschützt. Die Verbindung zwischen dem Kunststoffrahmen 5d und dem Schutzbelag 7d ist durch Aufstecken bzw. Aufschnappen realisiert. Alternativ können grundsätzlich der Kunststoffrahmen und der Schutzbelag auch durch Aufsprengen oder eine Schweißverbindung miteinander befestigt sein.

Gemäß dem fünften Ausführungsbeispiel (Fig. 5) ist eine Aufsatz-Glaskeramikmulde 1e gezeigt, die an einer Standherdwandung 43 befestigt ist. Wieder ist die Glaskeramikplatte 3 von einem Kunststoffrahmen 5e umspritzt, wobei dessen Oberseite 19e durch einen Schutzbelag 7e vor unmittelbarer Berührung durch eine heißes Kochgefäß geschützt ist. Dazu ist der Schutzbelag 7e als geschlossener Schutzrahmen aus Edelstahl ausgebildet und in den Kunststoffrahmen 5e gesteckt und geklebt. Der Schutzbelag 7e bzw. Schutzrahmen erstreckt sich mit einem Armierungsabschnit 45 tief ins Innere des Kunststoffrahmens 5e und stabilisiert diesen so über dessen gesamte Höhe und dessen gesamten Umfang.

Gemäß dem sechsten Ausführungsbeispiel (Fig.6) besteht eine Glaskeramikmulde 1f unter anderem aus einer Glaskeramikplatte 3, die mit einem Kunststoffrahmen 5f umspritzt ist. Der Kunststoffrahmen 5f weist auf seiner Oberseite 19f einen Schutzbelag 7f aus PPS auf. Dieser bedeckt flächenmäßig nur einen relativ geringen Teil des Kunststoffrahmens 5f. Trotzdem bildet er von der Oberseite 19f des Kunststoffrahmens 5f nach oben vorspringend kleine Schutzabstellflächen für den Kunststoffrahmen 5f. Die Geometrie der Abstellflächen bzw. deren Beabstandung ist derart gestaltet, daß ein Schutz des Kunststoffrahmens 5f vor darauf aufgestellten heißen Kochgefäßen gewährleistet ist. Ebenso können die Schutzabstellflächen durch auf dem Kunststoffrahmen 5f befestigte Metallplättchen reduziert sein.

## Patentansprüche

1. Glaskeramikmulde mit einer Glaskeramikplatte (3) und wenigstens einem darunter angeordneten Heizkörper (31a), wobei die Glaskeramikplatte (3) an deren Umfang von einem angespritzten Kunststoffrahmen (5a) umzogen ist, **dadurch gekennzeichnet,** daß auf einer Oberseite (19a; 19b; 19c; 19d; 19e; 19f) des Kunststoffrahmens (5a; 5b; 5c; 5d; 5e; 5f) ein die Glaskeramikplatte (3) umziehender Schutzbelag (7a; 7b; 7c; 7d; 7e; 7f) aus hochtemperaturbeständigem Material angeordnet ist.

2. Glaskeramikmulde nach Anspruch 1, **dadurch gekennzeichnet**, daß der Schutzbelag (7a; 7b; 7c; 7d) die Oberseite (19a; 19b; 19c; 19d) des Kunststoffrahmens (5a; 5b; 5c; 5d) im wesentlichen vollständig überdeckt.

3. Glaskeramikmulde nach Anspruch 1, **dadurch gekennzeichnet**, daß der Schutzbelag (7e; 7f) nur Teilbereiche der Oberseite (19e; 19f) des Kunststoffrahmens (5e; 5f) überdeckt und über diese hervorstehend, Schutzäbstellflächen auf dem Kunststoffrahmen (5e; 5f) bildet.

4. Glaskeramikmulde nach einem der vorhergehenden Ansprüche, **dadurch gekennzeichnet**, daß der Schutzbelag (7a; 7b; 7c; 7d; 7f) aus einem hochtemperaturbeständigen Kunststoff besteht und an die Glaskeramikplatte (3) bzw. den Kunststoffrahmen (5a; 5b; 5c; 5d; 5f) angespritzt ist.

5. Glaskeramikmulde nach Anspruch 4, **dadurch gekennzeichnet**, daß der Kunststoff ein schlechter Wärmeleiter ist.

6. Glaskeramikmulde nach einem der Ansprüche 1 bis 3, **dadurch gekennzeichnet**, daß der Schutzbelag (7e) aus Metall, insbesondere aus Edelstahl besteht.

7. Glaskeramikmulde nach Anspruch 6, **dadurch gekennzeichnet**, daß der Schutzbelag (7e) als Schutzrahmen ausgebildet ist und auf dem Kunststoffrahmen (5e) befestigt ist.

8. Glaskeramikmulde nach einem der vorhergehenden Ansprüche, **dadurch gekennzeichnet**, daß der Kunststoffrahmen (5b; 5e; 5f) den Randbereich der Glaskeramikplatte (3) an deren Ober- und Unterseite umfaßt.

9. Glaskeramikmulde nach einem der Ansprüche 1 bis 7, **dadurch gekennzeichnet**, daß der Schutzbelag (7a; 7c; 7d) den Randbereich der Glaskeramikplatte (3) an deren Ober- und Unterseite umfaßt.

10. Glaskeramikmulde nach Anspruch 8 oder 9, **dadurch gekennzeichnet**, daß der Schutzbelag (7a; 7c; 7d) oder der Kunststoffrahmen (5b; 5e; 5f) den Randbereich der Glaskeramikplatte (3) um zwischen etwa 1 und 10 mm, vorzugsweise 2 bis 5 mm übergreift.

11. Glaskeramikmulde nach einem der vorhergehenden Ansprüche, **dadurch gekennzeichnet**, daß zwischen dem Kunststoffrahmen (5e) oder dem Schutzbelag (7c) und der Glaskeramikplatte (3) ein diese umziehendes Dämpfungselement (39c; 39e) angeordnet ist.

12. Glaskeramikmulde nach einem der vorhergehenden Ansprüche, **dadurch gekennzeichnet**, daß der Kunststoffrahmen (5a; 5b; 5c; 5d) einstückig angeformte Elemente (15a; 15d) zur Positionierung der Heizkörper (31a; 31d) unter der Glaskeramikplatte (3) und/oder zur Aufnahme von elektrischen Leitungen oder dergleichen aufweist.

13. Glaskeramikmulde nach einem der Ansprüche 1 bis 11, **dadurch gekennzeichnet**, daß die Heizkörper (31c) direkt an der Glasplatte (3) befestigt sind.

14. Glaskeramikmulde nach einem der vorhergehenden Ansprüche, **dadurch gekennzeichnet**, daß der Schutzbelag (7e) sich von der Oberseite (19e) des Kunststoffrahmens (5e) aus in dessen Inneres nach unten erstreckt.

15. Glaskeramikmulde nach Anspruch 14, **dadurch gekennzeichnet**, daß der Schutzbelag (7e) aus Metall, insbesondere aus Edelstahl ist.

## Claims

1. Vitreous ceramic hob with a vitreous ceramic plate (3) and at least one heating element (31a) arranged thereunder, wherein the vitreous ceramic plate (3) is surrounded at its circumference by an injection-moulded-on synthetic material frame (5a), characterised in that a protective covering (7a; 7b; 7c; 7d; 7e; 7f) of high-temperature-resistant material and surrounding the vitreous ceramic plate (3) is arranged on an upper side (19a; 19b; 19c; 19d; 19e; 19f) of the synthetic material frame (5a; 5b; 5c; 5d; 5e; 5f).

2. Vitreous ceramic hob according to claim 1, characterised in that the protective covering (7a; 7b; 7c; 7d) substantially completely covers the upper side (19a; 19b; 19c; 19d) of the synthetic material frame (5a; 5b; 5c; 5d).

3. Vitreous ceramic hob according to claim 1, characterised in that the protective covering (7e; 7f) covers only partial regions of the upper side (19e; 19f) of the synthetic material frame (5e; 5f) and, projecting beyond these, forms protective deposit surfaces on the synthetic material frame (5e; 5f).

4. Vitreous ceramic hob according to one of the preceding claims, characterised in that the protective covering (7a; 7b; 7c; 7d; 7f) consists of a high-temperature-resistant material and is injection-moulded onto either the vitreous ceramic plate (3) or the synthetic material frame (5a; 5b; 5c; 5d; 5f).

5. Vitreous ceramic hob according to claim 4, characterised in that the synthetic material is a poor thermal conductor.

6. Vitreous ceramic hob according to one of the claims 1 to 3, characterised in that the protective covering (7e) consists of metal, in particular fine steel.

7. Vitreous ceramic hob according to claim 6, characterised in that the protective covering (7e) is constructed as protective frame and fastened on the synthetic material frame (5e).

8. Vitreous ceramic hob according to one of the preceding claims, characterised in that the synthetic material frame (5b; 5e; 5f) encompasses the rim region of the vitreous ceramic plate (3) at the upper side and the underside thereof.

9. Vitreous ceramic hob according to one of the claims 1 to 7, characterised in that the protective covering (7a; 7c; 7d) encompasses the rim region of the vitreous ceramic plate (3) at the upper side and the underside thereof.

10. Vitreous ceramic hob according to claim 8 or 9, characterised in that the protective covering (7a; 7c; 7d) or the synthetic material frame (5b; 5e; 5f) engages over the rim region of the vitreous ceramic plate (3) by between about 1 and 10 millimetres, preferably 2 to 5 millimetres.

11. Vitreous ceramic hob according to one of the preceding claims, characterised in that a damping element (39c; 39e) encompassing the vitreous ceramic plate (3) is arranged between this and the synthetic material frame (5e) or the protective covering (7c).

12. Vitreous ceramic hob according to one of the preceding claims, characterised in that the synthetic material frame (5a; 5b; 5c; 5d) comprises integrally moulded-on elements (15a; 15d) for the positioning of the heating elements (31a; 31d) below the vitreous ceramic plate (3) and/or for the reception of electrical lines or the like.

13. Vitreous ceramic hob according to one of the claims 1 to 11, characterised in that the heating elements (31c) are fastened directly at the vitreous ceramic plate (3).

14. Vitreous ceramic hob according to one of the preceding claims, characterised in that the protective covering (7e) extends downwardly from the upper side (19e) of the synthetic material frame (5e) into the interior thereof.

15. Vitreous ceramic hob according to claim 14, characterised in that the protective covering (7e) is of metal, in particular of fine steel.

## Revendications

1. Table en vitrocéramique comprenant une plaque en vitrocéramique (3) et au moins un corps de chauffe (31a) disposé au-dessous, la plaque en vitrocéramique (3) étant entourée le long de son périmètre par un encadrement en matière plastique (5a) moulé contre cette plaque, caractérisée en ce que, sur une face supérieure (19a ; 19b ; 19c ; 19d ; 19e ; 19f) de l'encadrement en matière plastique (5a ; 5b ; 5c ; 5d ; 5e ; 5f), est disposé un revêtement protecteur (7a ; 7b ; 7c ; 7d ; 7e ; 7f) en matière résistant aux hautes températures, et qui entoure la plaque en vitrocéramique (3).

2. Table en vitrocéramique selon la revendication 1, caractérisée en ce que le revêtement protecteur (7a ; 7b ; 7c ; 7d) recouvre sensiblement entièrement la face supérieure (19a ; 19b ; 19c ; 19d) de l'encadrement en matière plastique (5a ; 5b ; 5c ; 5d).

3. Table en vitrocéramique selon la revendication 1, caractérisée en ce que le revêtement protecteur (7e ; 7f) ne recouvre que des régions partielles de la face supérieure (19e ; 19f) de l'encadrement en matière plastique (5e ; 5f) et forme sur l'encadrement en matière plastique (5e ; 5f) des surfaces protectrices de pose en saillie au-dessus de cette face.

4. Table en vitrocéramique selon une des revendications précédentes, caractérisée en ce que le revêtement protecteur (7a ; 7b ; 7c ; 7d ; 7f) est composé d'une matière plastique résistant aux hautes températures et est moulé contre la plaque en vitrocéramique (3) ou contre l'encadrement en matière plastique (5a ; 5b ; 5c ; 5d ; 5f).

5. Table en vitrocéramique selon la revendication 4, caractérisée en ce que la matière plastique est un mauvais conducteur de chaleur.

6. Table en vitrocéramique selon une des revendications 1 à 3, caractérisée en ce que le revêtement protecteur (7e) est constitué de métal, en particulier d'acier inoxydable.

7. Table en vitrocéramique selon la revendication 6, caractérisée en ce que le revêtement protecteur (7e) est constitué en tant qu'encadrement protecteur et est fixé sur l'encadrement en matière plastique (5e).

8. Table en vitrocéramique selon une des revendications précédentes, caractérisée en ce que l'encadrement en matière plastique (5b ; 5e ; 5f) encadre la région de bord de la plaque en vitrocéramique (3) au niveau de sa face supérieure et de sa face inférieure.

9. Table en vitrocéramique selon une des revendications 1 à 7, caractérisée en ce que le revêtement protecteur (7a ; 7c ; 7d) encadre la région de bord de la plaque en vitrocéramique (3) au niveau de sa face supérieure et de sa face inférieure.

10. Table en vitrocéramique selon la revendication 8 ou 9, caractérisée en ce que le revêtement protecteur (7a ; 7c ; 7d) ou l'encadrement en matière plastique (5b ; 5e ; 5f) empiète sur la région de bord de la plaque en vitrocéramique (3) sur entre environ 1 et 10 mm, de préférence entre environ 2 et 5 mm.

11. Table en vitrocéramique selon une des revendications précédentes, caractérisée en ce qu'entre l'encadrement en matière plastique (5e) ou le revêtement protecteur (7c) et la plaque en vitrocéramique (3) est disposé un élément amortisseur (39c ; 39e) qui entoure cette plaque.

12. Table en vitrocéramique selon une des revendications précédentes, caractérisée en ce que l'encadrement en matière plastique (5a ; 5b ; 5c ; 5d) présente des éléments (15a ; 15d) venus de moulage en une seule pièce pour le positionnement des corps de chauffe (31a ; 31d) au-dessous de la plaque en vitrocéramique (3) et/ou pour recevoir des canalisations électriques ou analogues.

13. Table en vitrocéramique selon une des revendications 1 à 11, caractérisée en ce que les corps de chauffe (31c) sont fixés directement à la plaque de verre (3).

14. Table en vitrocéramique selon une des revendications précédentes, caractérisée en ce que le revêtement protecteur (7e) s'étend vers le bas à partir de la face supérieure (19e) de l'encadrement en matière plastique (5e) et pénètre à l'intérieur de celui-ci.

15. Table en vitrocéramique selon la revendication 14, caractérisée en ce que le revêtement protecteur (7e) est en métal, en particulier en acier inoxydable.
